# EUROPÄISCHE PATENTSCHRIFT

(11) **EP 0 955 811 B1**
(45) Veröffentlichungstag und Bekanntmachung des Hinweises auf die Patenterteilung: **28.01.2004**
(21) Anmeldenummer: 97946960.8
(22) Anmeldetag: 12.12.1997
(51) Int. Cl.: A21C 15/02

(54) **VERFAHREN UND VORRICHTUNGEN ZUM HERSTELLEN VON ESSBAREN WAFFELRÖLLCHEN**
METHOD AND DEVICE FOR PRODUCING EDIBLE WAFER ROLLS
PROCEDE ET DISPOSITIFS POUR LA PREPARATION DE ROULES GAUFRES COMMESTIBLES

(30) Priorität: 13.12.1996 AT 218296
(43) Veröffentlichungstag der Anmeldung: 17.11.1999
(73) Patentinhaber: FRANZ HAAS WAFFELMASCHINEN-INDUSTRIE AKTIENGESELLSCHAFT, 1210 Wien (AT)
(72) Erfinder: HAAS, Franz, Sen, A-1210 Wien (AT); HAAS, Johann, A-3400 Klosterneuburg (AT); JIRASCHEK, Stefan, A-1020 Wien (AT)
(74) Vertreter: Puchberger, Rolf
(86) Internationale Anmeldenummer: PCT/AT1997/000275
(87) Internationale Veröffentlichungsnummer: WO 1998/025474

(56) Entgegenhaltungen:
- EP-A- 0 272 341
- AT-B- 262 187
- AT-B- 314 960
- DE-B- 2 413 353
- FR-A- 2 272 611
- US-A- 3 792 954

## Beschreibung

### Technisches Gebiet:

Die Erfindung betrifft die Herstellung von eßbaren, knusprigen, spröden Waffelröllchen aus gebackenen, im warmen Zustand plastisch verformbaren, endlosen Waffelbändern, die jeweils über einen Dorn zu einem endlosen, hülsenförmigen Hohlkörper gewickelt werden, der in einzelne Waffelröllchen abgelängt wird, die beim Abkühlen eine knusprige, spröde Konsistenz annehmen.

### Stand der Technik:

Beim Herstellen von Waffelröllchen wird in einer Backmaschine auf einer heißen, in einer Richtung kontinuierlich um eine horizontale Drehachse umlaufenden Backfläche aus einem flüssigen, zuckerhältigen Waffelteig kontinuierlich ein endloses Waffelband gebacken, das im warmen Zustand plastisch verformbar ist und mit seiner Unterseite an der heißen Backfläche haftet. Das gebackene Waffelband wird auf einem vorgegebenen Abnahmeniveau in Laufrichtung der Backfläche von dieser abgenommen und in einer tiefer liegenden Wickelvorrichtung schraubenförmig überlappend zu einem endlosen, plastisch verformbaren, hülsenförmigen Hohlkörper gewickelt, von dem die einzelnen Waffelröllchen abgetrennt werden, die beim anschließenden Abkühlen die für sie typische, knusprige, spröde Konsistenz annehmen. Das gebackene Waffelband wird durch ein horizontales, zur Laufrichtung der Backfläche senkrecht angeordnetes Abnahmemesser von der an diesem vorbeilaufenden Backfläche abgenommen.

Das abgenommene Waffelband wird in einer zu seiner Bahn bzw. Laufrichtung schräg angeordneten Wickelvorrichtung, wie sie beispielsweise aus der AT-PS 314 960 bekannt ist, schraubenförmig überlappend zu einem endlosen, plastisch verformbaren, hülsenförmigen Hohlkörper gewickelt. Diese Wickelvorrichtung sieht zwei um zueinander parallele Drehachsen gegensinnig rotierende Wickelorgane vor, die zwischen sich einen Wickelspalt bilden. Ein Wickelorgan ist als Dorn ausgebildet, um den herum des Waffelband schraubenförmig überlappend zu einem hülsenförmigen Hohlkörper gewickelt wird. Das andere Wickelorgan ist als Walze ausgebildet, die das gebackene Waffelband dem Dorn bzw. dem Wickelspalt schräg zuführt und das Waffelband während des Wickelns gegen den Dorn bzw gegen den entstehenden hülsenförmigen Hohlkörper drückt. Die Walze trägt an ihrem Umfang ein Transportgewinde mit dessen Hilfe der hülsenförmige Hohlkörper zusammen mit dem rotierenden Dorn in dessen Längsrichtung vorgeschoben wird. Die Schrägstellung des Wickelspaltes zur Laufrichtung des Waffelbandes einerseits bzw. die Drehzahl der mit dem Gewinde versehenen Walze anderseits bestimmen das Ausmaß der gegenseitigen Überlappung der einzelnen Windungen des Waffelbandes beim Wickeln des hülsenförmigen Hohlkörpers und damit die Anzahl der jeweils übereinanderliegenden Waffelbandlagen bzw. die Dicke des durch die übereinanderliegenden Waffelbandlagen gebildeten hülsenförmigen Hohlkörpers.

Zur Herstellung des endlosen Waffelbandes wird der Waffelteig, je nach Backmaschine, direkt auf einem nach oben weisenden Teil der heißen, umlaufenden Backfläche aufgegossen oder der heißen umlaufenden Backfläche an einem nach unten weisenden Teil von einem Leitblech zugeführt, dessen Oberseite zur Backfläche hin schräg abfällt und zusammen mit dieser einen keilförmigen Spalt bildet, der mit Waffelteig gefüllt ist und aus dem der Waffelteig von der heißen, umlaufenden Backfläche kontinuierlich abgezogen wird. In beiden Fällen entsteht auf der heißen Backfläche ein endloses Band aus Waffelteig, das mit seiner Unterseite auf der Backfläche haftet und während des Umlaufes der Backfläche zu einem plastisch verformbaren Waffelband gebacken wird.

Beim Einstellen der Breite und der Dicke das jeweiligen Waffelbandes werden, je nach Backmaschine, unterschiedliche Parameter herangezogen. Ein Parameter ist die Oberflächengestaltung der umlaufenden Backfläche, die ganz glatt ausgebildet, oder mit einer Vertiefung versehen sein kann, die das jeweilige Teigband in sich aufnimmt. Ein weiterer Parameter ist die Viskosität des hauptsächlich aus Mehl, Zucker und Wasser zubereiteten, flüssigen Waffelteiges, dessen Viskosität hauptsächlich über den Wasseranteil verändert wird. Ein weiterer Parameter ist die Art wie der flüssige Waffelteig auf die Backfläche aufgebracht wird. Beim Aufbringen über ein Leitblech können der keilförmige Spalt zwischen Backfläche und Leitblech und die seitlichen Begrenzungen des Leitbleches zur Steuerung der Breite und der Dicke des gebackenen Waffelbandes herangezogen werden. Beim direkten Aufgießen auf die umlaufende Backfläche können ein oder mehrere, jeweils auf die Backfläche gerichtete Gießstrahlen eingesetzt werden. Die Breite und die Dicke des gebackenen Waffelbandes kann durch die Breite eines einzelnen stationären Gießstrahles, oder durch die räumliche Anordnung mehrerer stationärer Gießstrahlen entlang der Backfläche, oder durch die Bewegung eines oder mehrerer Gießstrahlen gegenüber der Backfläche beeinflußt werden.

Um mit der Herstellung der Waffelröllchen beginnen zu können, wird zuerst flüssiger Waffelteig auf die heiße, bereits auf Backtemperaturen zwischen 130 und 220 Grad Celsius aufgeheizte, umlaufende Backfläche aufgebracht, auf der sich ein Teigband bildet, das während des Umlaufes der Backfläche zu einem plastisch verformbaren Waffelband gebacken wird, dessen Bandanfang zum stationären Abnahmemesser gelangt und über dieses hinweg nach unten absinken gelassen wird, bis der entstehende Anfangsabschnitt des gebackenen Waffelbandes lang genug ist, um von einer Bedienungsperson mit der Hand erfaßt zu werden. Der lange Anfangsabschnitt wird dann einmal händisch um den rotierenden Dorn herumgewickelt und in den Wickelspalt der Wickelvorrichtung eingeführt. Dieser Vorgang wird von der Bedienungsperson sehr rasch und mit Schutzhandschuhen, um beim Erfassen des heißen Anfanges des gebackenen Waffelbandes bzw. bei einer allfälligen Berührung der sehr heißen Teile der Backmaschine, wie der Backfläche oder des Abnahmemessers, bzw. der heißen Teile der Wickelvorrichtung, wie des rotierenden Dornes und der gegensinnig rotierenden Walze, keinen Schaden zu nehmen.

Bei den bekannten Backmaschinen ist rund um die umlaufende Backfläche bzw. zwischen der umlaufenden Backfläche und der Wickelvorrichtung genügend Raum vorhanden, um den langen Anfangsabschnitt des gebackenen Waffelbandes mit der Hand erfassen und um den rotierenden Dorn wickeln zu können. Es bleibt aber das Problem des Hantierens mit einem heißen Waffelband in einem von heißen rasch rotierenden Teilen umgebenen Raum.

Um die Leistungsfähigkeit der Backmaschinen zum kontinuierlichen Herstellen von eßbaren Waffelrölichen zu steigern, wurden auf der äußeren Mantelfläche einer beheizten, um eine horizontale Drehachse rotierenden Backtrommeln bis zu sechs Waffelbänder gleichzeitig nebeneinander gebacken und in sechs nahe bei einander angeordneten Wickelvorrichtungen schraubenförmig überlappend zu sechs endlosen hülsenförmigen Hohlkörpern gewickelt, die einzeln in Waffelröllchen zerteilt wurden. Bei diesen Backmaschinen bleibt zwischen den Wickelvorrichtungen mit ihren rasch rotierenden Wickelorganen bzw. zwischen den Wickelvorrichtungen und der heißen rotierenden Backtrommel nur mehr wenig Raum, um jedes einzelne gebackene Waffelband mit der Hand zu erfassen und um den rotierenden Dorn der jeweiligen Wickelvorrichtung herumzuwickeln.

### Zusammenfassung der Erfindung:

Aufgabe der Erfindung ist es hier Abhilfe zu schaffen und ein Verfahren und Vorrichtungen für die Herstellung von eßbaren Waffelröllchen anzugeben, bei welchen ein Hantieren mit dem heißen Waffelband in einem von heißen Teilen umgebenen Raum entfällt.

Zur Lösung dieser Aufgabe wird ein Verfahren zum kontinuierlichen Herstellen von eßbaren Waffelröllchen vorgeschlagen, bei welchem auf einer endlosen, umlaufenden Backfläche aus flüssigem, zuckerhältigem Waffelteig kontinuierlich ein endloses, im warmen Zustand plastisch verformbares Waffelband gebacken wird, das über ein nach unten abfallendes Abnahmemesser von der heißen Backfläche auf einem vorgegebenen Abnahmeniveau abgenommen und unterhalb des Abnahmeniveaus in einem schräg zur Bahn des Waffelbandes angeordneten, zwischen zwei gegensinnig rotierenden Wickelorganen ausgebildeten Wickelspalt um ein, als Dorn ausgebildetes Wickelorgan herum schraubenförmig überlappend zu einem endlosen hülsenförmigen Hohlkörper gewickelt wird. Dieser wird in einzelne Waffelröllchen abgelängt, die beim Abkühlen eine knusprige, spröde Konsistenz annehmen.

Dieses Verfahren ist erfindungsgemäß dadurch gekennzeichnet, daß am Beginn jedes Wickelvorganges der Anfang des gebackenen Waffelbandes vom Abnahmeniveau über das Abnahmemesser hinweg durch die Schwerkraft bis zu den, den Wickelspalt bildenden Wickelorganen absinken gelassen und dann von zumindest einem der beiden, den Wickelspalt bildenden Wickelorgane in den Wickelspalt einziehen gelassen wird und der Anfang des Waffelbandes entweder durch Haftung auf dem als Dorn ausgebildeten Wickelorgan oder durch plastisches Verformen des Waffelbandes wieder zu dem in den Wickelspalt einlaufenden Waffelband geführt wird.

Erfindungsgemäß wird das bisher händisch ausgeführte Einfädeln des Waffelbandanfanges in die Wickelvorrichtung durch ein selbsttätig ablaufendes Verfahren ersetzt, bei dem ein Hantieren einer Bedienungsperson in der unmittelbaren Umgebung von sehr heißen und gegensinnig rasch rotierenden Teilen einer Backmaschine nicht mehr erforderlich ist.

Gemäß einem weiteren Merkmal der Erfindung kann der auf einer Seite in den Wickelspalt eingezogene und auf der anderen Seite des Wickelspaltes austretende Anfang des gebackenen Waffelbandes innerhalb eines stationären, ringförmigen Führungskanales um das als Dorn ausgebildete Wickelorgan herum bis gegen das in den Wickelspalt eintretende Waffelband geführt werden.

Diese Rückführung des einmal bereits durch den Wickelspalt eingezogenen Waffelbandanfanges in den Wickelspalt führt auch dann zum selbsttätigen Anfang des Wickelvorganges, wenn sich der Waffelbandanfang nicht gleich um den Dorn herumschmiegt.

Weiters schlägt die Erfindung eine Backmaschine zum kontinuierlichen Herstellen von eßbaren Waffelröllchen vor. Diese Backmaschine ist mit zumindest einer, kontinuierlich umlaufenden, beheizten Backfläche versehen, auf der zumindest ein, endloses, im warmen Zustand plastisch verformbares Waffelband aus flüssigem, zuckerhältigem Waffelteig gebacken wird. Diese Backmaschine umfaßt weiters eine Verarbeitungsstation, in der für jedes einzelne gebackene Waffelband eine der Backfläche benachbarte Abnahmevorrichtung, eine dieser nachgeordnete Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen vorgesehen ist. Jede Wickelvorrichtung besitzt einen zur Bahn des betreffenden gebackenen Waffelbandes schräg angeordneten Wickelspalt, der zwischen zwei gegensinnig rotierenden Wickelorganen ausgebildet ist, von denen eines als Dorn ausgebildet ist, um den herum das gebackene Waffelband schraubenförmig überlappend zu einem endlosen hülsenförmigen Hohlkörper gewickelt wird, und das andere als Walze ausgebildet ist, die das gebackene Waffelband gegen den rotierenden Dorn drückt. Diese Backmaschine ist erfindungsgemäß dadurch gekennzeichnet, daß jede Wickelvorrichtung eine Einfädelvorrichtung umfaßt, die den Anfang des gebackenen Waffelbandes selbsttätig in den Wickelspalt der betreffenden Wickelvorrichtung einführt.

Weiters schlägt die Erfindung eine Wickelvorrichtung zum Herstellen eines endlosen hülsenförmigen Hohlkörpers aus einem gebackenen, im warmen Zustand plastisch verformbaren, endlosen Waffelband vor. Diese Wickelvorrichtung ist mit zwei, einen Wickelspalt bildenden, gegensinnig rotierenden Wickelorganen versehen, von denen eines als Dorn ausgebildet ist, um den herum das gebackene Waffelband schraubenförmig überlappend zu einem endlosen hülsenförmigen Hohlkörper gewickelt wird, und das andere als Walze ausgebildet ist, die das gebackene Waffelband gegen den rotierenden Dorn drückt. Diese Wickelvorrichtung ist erfindungsgemäß dadurch gekennzeichnet, daß eine Einfädelvorrichtung vorgesehen ist, die den Anfang des gebackenen Waffelbandes selbsttätig in den von dem Dom und der Walze begrenzten Wickelspalt einführt.

Gemäß einem weiteren Merkmal der Erfindung kann die Einfädelvorrichtung zum erstmaligen Einführen des Waffelbandanfanges in den Wickelspalt ein dem Wickelspalt vorgelagertes Einfädelorgan umfassen, das als zum Wickelspalt hin abfallende Leitfläche ausgebildet ist.

Gemäß einem weiteren Merkmal der Erfindung kann die Einfädetvorrichtung zum erneuten Einführen des aus dem Wickelspalt austretenden Waffelbandanfanges zumindest ein dem Wickelspalt nachgeordnetes Einfädelorgan umfassen, das einen Führungskanal nach außen begrenzt, der das als Dorn ausgebildete Wickelorgan in dem zwischen dem als Walze ausgebildeten Wickelorgan und dem in den Wickelspalt eintretenden Waffelband gelegenen Sektor umgibt

Gemäß einem weiteren Merkmal der Erfindung kann das den Führungskanal nach außen begrenzende Einfädelorgan als eine dem Dorn zugewandte, zylindrische Leitfläche ausgebildet sein.

Gemäß einem weiteren Merkmal der Erfindung kann der Führungskanal nach außen von einer zum Dorn parallelen und zum Dorn gegensinnig rotierenden Walze begrenzt werden.

Gemäß einem weiteren Merkmal der Erfindung kann der Führungskanal nach außen von mehreren, bogenförmig um den Dorn herum angeordneten, zum Dorn parallelen und zum Dorn gegensinnig rotierenden Walzen begrenzt werden.

Gemäß einem weiteren Merkmal der Erfindung kann der Führungskanal nach außen von einer dem Dorn zugewandten, zylindrischen Leitfläche begrenzt werden.

Gemäß einem weiteren Merkmal der Erfindung kann die zylindrische Leitfläche an ihrem der Walze benachbarten Rand als ein mit der Walze zusammenwirkendes Abstreifmesser für den Waffelbandanfang ausgebildet sein.

Nachstehend wird die Erfindung an einigen Ausführungsbeispielen anhand der Zeichnungen näher erläutert.

### Kurze Beschreibung der Zeichnungen:

In den Zeichnungen zeigen:
Fig. 1 schematisch einen Teil einer Verarbeitungsstation einer Backmaschine zum kontinuierlichen Herstellen von eßbaren Waffelröllchen mit einer ersten Ausführungsform einer Wickelvorrichtung. die eine erste Ausführungsform einer Einfädelvorrichtung zum selbsttätigen Einführen des Waffelbandanfanges in den Wickelspalt der Wickelvorrichtung umfaßt, wobei die Fig. 1a schematisch einen Teil der umlaufenden Backfläche mit der dieser benachbarten Wickelvorrichtung von der Seite zeigt und die Fig, 1b eine Draufsicht auf die Wickelvorrichtung gemäß der Linie A-A in Fig. 1a zeigt,
Fig. 2 zeigt eine der Fig. 1a entsprechende schematische Darstellung einer Wickelvorrichtung mit einer zweiten Ausführungsform der Einfädelvorrichtung,
Fig. 3 zeigt eine der Fig. 1a entsprechende schematische Darstellung einer Wickelvorrichtung mit einer dritten Ausführungsform der Einfädelvorrichtung,
Fig. 4 zeigt eine der Fig. 1a entsprechende schematische Darstellung einer Wickelvorrichtung mit einer vierten Ausführungsform der Einfädelvorrichtung,
Fig. 5 zeigt eine der Fig. 1a entsprechende schematische Darstellung einer Wicketvorrichtung mit einer fünften Ausführungsform der Einfädelvorrichtung,
Fig. 6 zeigt eine der Fig. 1a entsprechende schematische Darstellung einer Wickelvorrichtung mit einer sechsten Ausführungsform der Einfädelvorrichtung,
Fig. 7 schematisch einen Teil einer Verarbeitungsstation einer weiteren Ausführungsform einer Backmaschine, bei der auf der Außenseite einer beheizten Backtrommel nebeneinander vier endlose Waffelbänder gebacken werden, die in der Verarbeitungsstation in vier an der Außenseite der Backtrommel angeordneten Wickelvorrichtungen jeweils schraubenförmig überlappend zu einem endlosen hülsenförmigen Hohlkörper gewickelt werden, und
Fig. 8 schematisch einen Teil der Verarbeitungsstation einer Backmaschine, deren Backtrommel nur aus einem zylindrischen Mantel besteht auf dessen Außenseite und Innenseite jeweils zwei endlose Waffelbänder gleichzeitig nebeneinander gebacken werden, die in den innerhalb bzw. außerhalb des Mantels angeordneten Wickelvorrichtungen der Verarbeitungsstation jeweils schraubenförmig überlappend zu einem endlosen hülsenförmigen Hohlkörper gewickelt werden.

### Beschreibung von Ausführungsbeispielen:

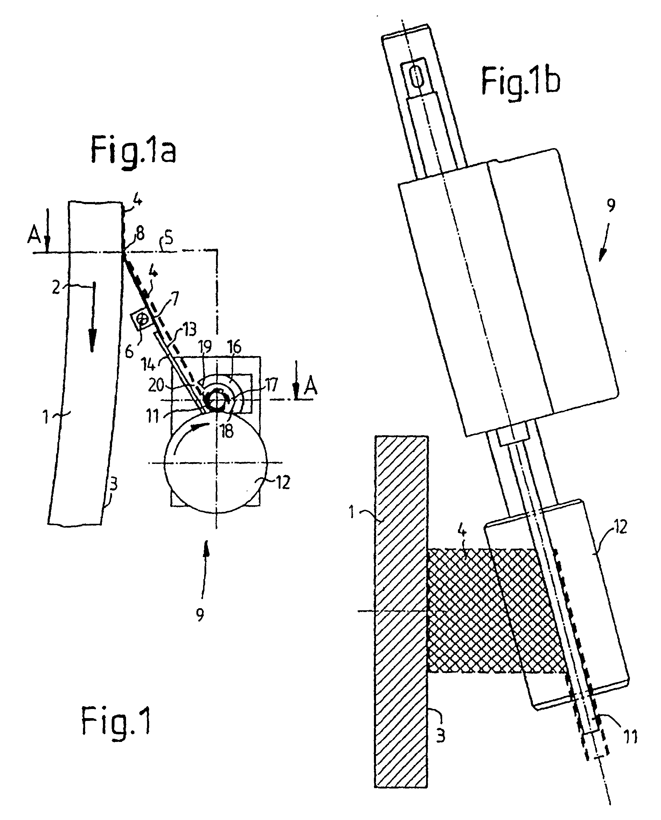

In den Fig. 1a und 1b ist ein Teil einer Backmaschine zum kontinuierlichen Herstellen von eßbaren Waffelröllchen dargestellt, bei der eine beheizte, zylindrische Backtrommel um eine horizontale Drehachse kontinuierlich umläuft. Die Drehachse der Backtrommel liegt in Fig. 1a senkrecht zur Zeichenebene und in Fig. 1b parallel zur Zeichenebene.

Auf der Außenseite des zylindrischen Mantels 1 der in Fig. 1a in Richtung des Pfeiles 2 umlaufenden Backtrommel ist eine endlose Backfläche 3 angeordnet, auf die kontinuierlich ein flüssiger, zuckerhältiger Waffelteig aufgetragen wird, der auf der Backfläche 3 ein endloses Teigband bildet, das mit der Backtrommel in der Laufrichtung 2 umläuft und während des Umlaufens gebacken wird. Dabei entsteht ein, auf der heißen Backfläche 3 mit seiner Unterseite haftendes, im warmen Zustand plastisch verformbares Waffelband 4, das im Bereich des seitlichen Trommelscheitels auf einem vorgegebenen horizontalen Abnahmeniveau 5 von der heißen Backfläche 3 abgenommen wird. Ein um eine zur Drehachse der Backtrommel parallele Achse 6 schwenkbares Abnahmemesser 7 liegt oberhalb seiner Schwenkachse 6 mit seiner Oberkante 8 auf dem Abnahmeniveau 5 an der umlaufenden Backfläche 3 an. Das Abnahmemesser 7 erstreckt sich von seiner Oberkante 8 über seine Schwenkachse 6 hinweg schräg nach unten.

Unterhalb des Abnahmeniveaus 5 ist eine Wickelvorrichtung 9 angeordnet, in der das gebackene Waffelband 4 beim Passieren eines zu seiner Laufrichtung schräg angeordneten Wickelspaltes 10 kontinuierlich schraubenförmig überlappend zu einem hülsenförmigen Hohlkörper gewickelt wird. Der Wickelspalt 10 wird nach oben von einem, um eine horizontale Drehachse rotierenden Dorn 11 begrenzt und nach unten von einer Walze 12, die um eine horizontale, zum Dorn 11 parallele Drehachse gegensinnig zum Dorn 11 rotiert. Die gegenüber dem Dom 11 wesentlich dickere Walze 12 rotiert im gleichen Sinn wie die Backtrommel und ist auf ihrer Außenseite mit einem, nicht dargestellten Gewinde versehen. Während des Wickelns wird das gebackene Waffelband 4 von der, an seiner Unterseite anliegenden, rotierenden Walze 12 mit seiner Oberseite zum rotierenden Dom 11 gedrückt und durch das Gewinde der Walze 12 in Längsrichtung des Dornes 11 vorgeschoben. Das Waffelband 4 wird um den Dorn 11 herum schraubenförmig überlappend zu einem hülsenförmigen Hohlkörper gewickelt, der auf seiner Innenseite vom Dorn 11 und an seiner Außenseite von der Walze 12 jeweils durch Reibung mitgenommen und durch den Wickelvorgang selbst kontinuierlich in Längsrichtung des Dornes 11 vorgeschoben wird.

Der Winkel, unter dem der Wickelspalt 10 bzw. die zu diesem parallelen Wickelorgane 11 und 12 schräg zur Laufrichtung des Waffelbandes 4 angeordnet sind, bestimmt im wesentlichen das Ausmaß der gegenseitigen Überlagerung der einzelnen Windungen des gewickelten Waffelbandes und damit die Anzahl der übereinanderliegenden Bandwindungen, die jeweils die Dicke des hülsenförmigen Hohlkörpers bilden, aus dem die Waffelröllchen hergestellt werden.

Die Wickelvorrichtung 9 umfaßt weiters eine stationäre Einfädelvorrichtung für den Waffelbandanfang, die am Beginn jedes Wickelvorganges das Aufwickeln des Anfanges des gebackenen Waffelbandes 4 um den Dorn 11 herum unterstützt. Die Einfädelvorrichtung sieht eine, dem Wickelspalt 10 vorgelagerte, nach unten abfallende Leitfläche 13 vor, die vom Abnahmemesser 7 bis zum Wickelspalt 10 reicht und breiter als das gebackene Waffelband 4 ist. Die Leitfläche 13 ist auf der Oberseite eines Leitbleches 14 angeordnet, das sich von der Unterkante des Abnahmemessers 7 schräg nach unten und am Dorn 11 vorbei bis zur Oberfläche der Walze 12 erstreckt. Die Leitfläche 13 bzw. das Leitblech 14 bilden ein, dem Wickelspalt vorgelagertes Einfädelorgan.

In der Anlaufphase des Herstellungsprozesses der Waffelröllchen wird der auf der umlaufenden Backfläche 3 haftende Anfang des gebackenen Waffelbandes 4 durch das stationäre Abnahmemesser 7 von der Backfläche 3 abgenommen und sinkt durch die Schwerkraft über das Abnahmemesser 7 hinweg zuerst auf die nach unten abfallende Leitfläche 13 der Einfädelvorrichtung und dann entlang dieser Leitfläche 13 am Dom 11 vorbei nach unten auf die Oberfläche der Walze 12. Die rotierende Walze 12 nimmt den auf ihre Oberfläche herabsinkenden Waffelbandanfang durch Reibung in ihre Drehrichtung zum Wickelspalt 10 hin mit und drückt ihn gegen den gegensinnig rotierenden Dorn 11, der den Waffelbandanfang ebenfalls durch Reibung in seine Drehrichtung mitnimmt. Zur Erhöhung der Reibung kann der Dorn 11 an seiner Außenseite mit axialen Längsrippen versehen sein. Das an den Waffelbandanfang anschließende Waffelband 4 wird von der Walze 12 gegen den Dorn 11 gedrückt und schmiegt sich an den Dorn 11 an. Vor dem Vollenden einer ganzen Umdrehung des Domes 11 trifft der Waffelbandanfang gegen die Oberseite des in den Wickelspalt 10 eintretenden Waffelbandes 4. Dieses wird von der Walze 12 gegen den Dorn 11 bzw. gegen den von diesem durch Reibung mitgenommenen Waffelbandanfang gedrückt. Damit ist der Einfädelvorgang beendet und der Anfang des hülsenförmigen Hohlkörpers hergestellt. Beim weiteren Aufwickeln des Waffelbandes 4 wird der von der Oberkante 8 des Abnahmemessers 7 bis zum Wickelspalt 10 reichende Abschnitt des Waffelbandes 4 durch den Wickelvorgang gestrafft und vom Abnahmemesser 7 und von der Leitfläche 13 abgehoben.

Um die Bildung der ersten Bandschlaufe bzw. der ersten Bandwindung um den rotierenden Dorn 11 herum zu unterstützen und die Reibungsmitnahme des Waffelbandanfanges durch den rotierenden Dorn 11 während des Einfädelvorganges zu unterstützen, können ein oder mehrere dem Wickelspalt 10 nachgeordnete Einfädelorgane um den Dorn 11 herum angeordnet sein.

Fig. 1 a zeigt ein, dem Wickelspalt 10 nachgeordnetes, stationäres Einfädelorgan, das als eine dem Dorn 11 zugewandte, zylindrische Leitfläche 15 ausgebildet ist, deren Durchmesser deutlich größer ist als der Außendurchmesser des größten, mit der Wickelvorrichtung herzustellenden hülsenförmigen Hohlkörpers. Die zylindrische Leitfläche 15 ist auf der Innenseite eines zum Dorn 11 koaxial gekrümmten Leitbleches 16 angeordnet, das sich in einem Bogen von etwa 175 Winkelgraden um den Dorn 11 herum erstreckt und einen den Dorn 11 umgebenden, ringförmigen Führungskanal 17 nach außen begrenzt.

Das Leitblech 16 besitzt einen der Oberfläche der Walze 12 benachbarten Längsrand 18, der als ein mit der Walze 12 zusammenwirkendes Abstreifmesser ausgebildet ist. Sollte der Anfang des gebackenen Waffelbandes an der Oberfläche der Walze 12 hängen bleiben, so wird dieser durch das Abstreifmesser von der Walze 12 abgenommen. Das Leitblech 16 besitzt weiters einen Längsrand 19, der in der Nähe der, dem Wickelspalt 10 vorgelagerten Leitfläche 13 angeordnet ist und zusammen mit dieser einen Längsschlitz 20 bildet, durch den das gebackene Waffelband 4 in das Innere der Einfädelvorrichtung eintritt und zu dem innerhalb der Einfädelvorrichtung angeordneten Wickelspalt 10 der Wickelvorrichtung 9 gelangt.

Sollte sich der Anfang des Waffelbandes 4 nach dem Passieren des Wickelspaltes 10 vom Dorn 11 weg bewegen, so tritt er in den ringförmigen Führungskanal 17 ein. In diesem wird der Waffelbandanfang von dem, durch die gegensinnig rotierenden Wickelorgane 11, 12 nachgeschobenen Waffelband 4 gegen die zylindrische Leitfläche 15 und entlang dieser um den Dorn 11 herum in dessen Drehrichtung vorgeschoben. Wenn der Waffelbandanfang auf das durch den Längsschlitz 20 in die Einfädelvorrichtung eintretenden Waffelband 4 trifft, wird er an der Oberseite des Waffelbandes von diesem durch Reibung in Rotationsrichtung des Dornes 11 mitgenommen und zwischen dem Waffelband 4 und dem Dorn 11 neuerlich in den Wickelspalt 10 einführt. Dort drückt die Walze 12 das Waffelband 4 von außen gegen den Waffelbandanfang und diesen gegen die Außenseite des Dornes 11. Damit ist auch in diesem Fall der Einfädelvorgang beendet und der Anfang des hülsenförmigen Hohlkörpers hergestellt.

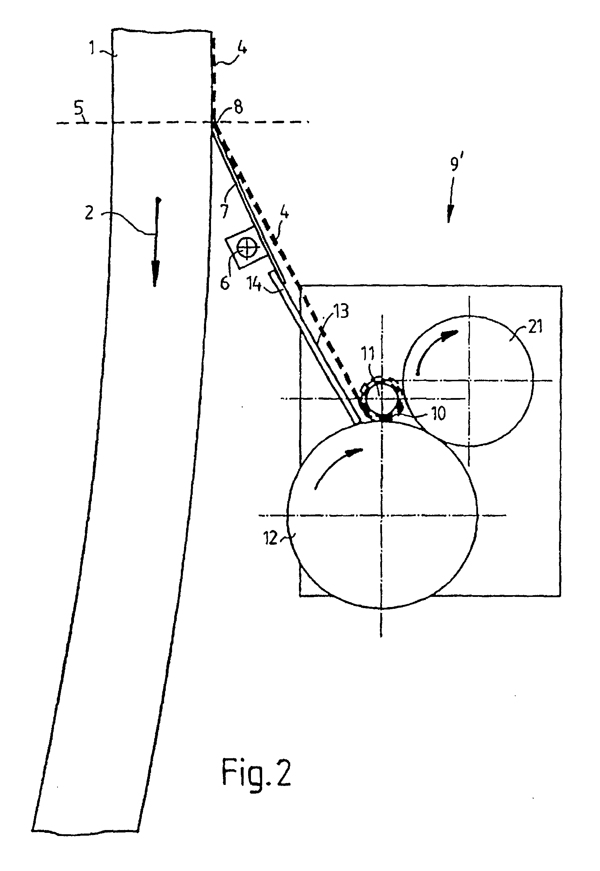

Fig. 2 zeigt eine Wickelvorrichtung 9', die jener der Fig. 1 entspricht. Die Einfädeivorrichtung dieser Wickelvorrichtung 9' sieht ein dem Wickelspalt 10 nachgeordnetes Einfädelorgan vor, das als rotierende Walze 21 ausgebildet ist, deren Abstand vom Dom 11 größer ist als jener von der Walze 12. Das als Walze 21 ausgebildete Einfädelorgan rotiert gegensinnig zum Dorn 11 und im gleichen Sinn wie die Walze 12. Sollte sich der Anfang des Waffelbandes 4 nach dem Passieren des Wickelspaltes 10 vom Dorn 11 weg bewegen, so kommt er mit der Walze 21 in Berührung und wird er von dieser durch Reibung in Drehrichtung des Dornes 11 mitgenommen und dem Dorn 11 zugeführt.

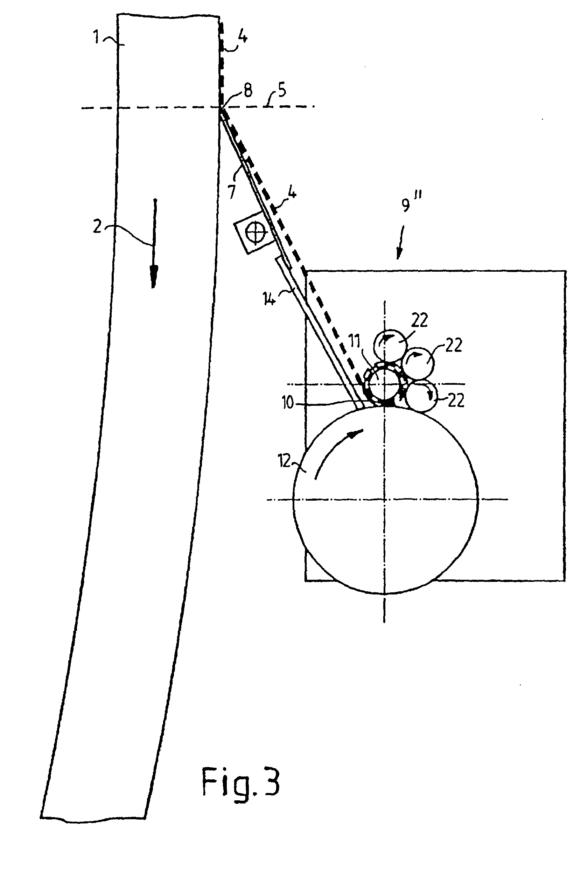

Fig. 3 zeigt eine Wickelvorrichtung 9", die jener der Fig. 1 bzw. der Fig. 2 entspricht. Die Einfädelvorrichtung dieser Wickelvorrichtung 9" sieht drei dem Wickelspalt 10 nachgeordnete Einfädelorgane vor, die um den Dorn 11 herum im Abstand voneinander angeordnet sind. Diese Einfädelorgane sind als Walzen 22 ausgebildet, die jeweils gegensinnig zum Dorn 11 und im gleichen Sinn wie die Walze 12 rotieren. Sollte sich der Anfang des Waffelbandes 4 nach dem Passieren des Wickelspaltes 10 vom Dorn 11 weg bewegen, so tritt er in den ringförmigen Führungskanal 17 ein, der nach außen durch die gleichsinnig rotierenden Walzen 22 begrenzt wird. Wenn der Waffelbandanfang mit einer der Walzen 22 in Berührung kommt, so wird er von der betreffenden Walze 22 durch Reibung in Drehrichtung des Dornes 11 mitgenommen und dem Dorn 11 zugeführt.

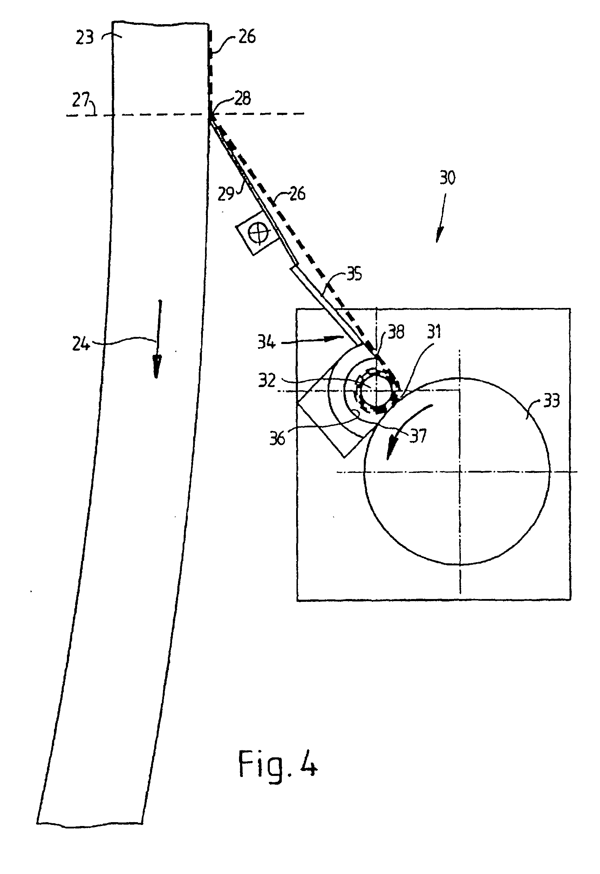

Die Fig. 4 zeigt einen Teil einer Backmaschine zum kontinuierlichen Herstellen von eßbaren Waffelröllchen, bei der eine beheizte, zylindrische Backtrommel 23 um eine horizontale Drehachse kontinuierlich in Richtung des Pfeiles 24 umläuft. An der Außenseite der Backtrommel 23 ist eine umlaufende Backfläche 25 angeordnet, auf der ein Waffelband 26 kontinuierlich gebacken wird, das im warmen Zustand plastisch verformbar ist. Das gebackene Waffelband 26 wird im Bereich des seitlichen Trommelscheitels auf einem vorgegebenen horizontalen Abnahmeniveau 27 durch die zur Drehachse der Backtrommel 23 parallele Oberkante 28 eines schwenkbaren Abnahmemesser 29 von der heißen Backfläche 25 abgenommen. Das abgenommene Waffelband 26 wird einer unterhalb des Abnahmeniveaus 27 angeordneten Wickelvorrichtung 30 zugeführt, die einen zur Laufrichtung des Waffelbandes 26 schräg angeordneten Wickelspalt 31 enthält. Dieser wird von einem, im gleichen Sinn wie die Backtrommel 23 rotierenden Dorn 32 und einer parallel zu ihm angeordneten Walze 33 gebildet, die ihrerseits im Gegensinn zur Drehrichtung 24 der Backtrommel 23 und im Gegensinn zur Drehrichtung des Domes 32 rotiert.

Die Wickelvorrichtung 30 enthält eine Einfädelvorrichtung 34 mit einem dem Wickelspalt 31 vorgelagerten, ersten Einfädetorgan und einem dem Wickelspalt 31 nachgeordneten, zweiten Einfädelorgan. Das erste Einfädelorgan wird von einer nach unten abfallenden, ebenen Leitfläche 35 gebildet, das sich von der Unterkante des Abnahmemessers 29 schräg nach unten erstreckt und oberhalb des Dornes 32 endet. Das zweite Einfädelorgan ist als eine dem Dorn 32 zugewandte, zylindrische Leitfläche 36 ausgebildet, die sich um den Dorn 32 herum von der Oberfläche der Walze 33 bis zum ersten Einfädelorgan 35 erstreckt.

In der Anlaufphase des Herstellungsprozesses der Waffelröllchen wird der Anfang des gebackenen Waffelbandes 26 durch das Abnahmemesser 29 von der umlaufenden Backfläche 25 abgenommen und sinkt durch die Schwerkraft über das Abnahmemesser 29 hinweg nach unten auf die abfallende Leitfläche 35 und entlang dieser bis zu ihrem unteren Ende 38. Nach dem Verlassen der Leitfläche sinkt der Waffelbandanfang von oben auf den rotierenden Dorn 32 und wird von diesem durch Reibung in seiner Drehrichtung zum Wickelspalt 31 mitgenommen. Im Wickelspalt 31 wird der Waffelbandanfang an der Unterseite vom Dorn 32 und an der Oberseite von der Walze 33 durch die Reibung mitgenommen, zwischen Dorn 32 und Walze 33 eingeklemmt und in den Wickelspalt 31 eingezogen wird. Anschließend wird der von der Oberkante 28 des Abnahmemessers 29 bis zum Wickelspalt 31 reichende Abschnitt des Waffelbandes 26 durch den beginnenden Wickelvorgang gestrafft und von der Oberseite des Abnahmemessers 29 und von der abfallenden Leitfläche 35 etwas abgehoben.

Nach dem Passieren des Wickelspaltes 31 schmiegt sich der Waffelbandanfang mit seiner Unterseite an den rotierenden Dorn 32 an und wird mit seiner Oberseite gegen die Unterseite des entlang der abfallenden Leitfläche 33 nachfolgenden Abschnittes des Waffelbandes 26 angedrückt und zusammen mit diesem neuerlich durch den Wickelspalt 31 transportiert, womit der Anfang des hülsenförmigen Hohlkörpers hergestellt ist.

Sollte sich der Waffelbandanfang nach dem Passieren des Wickelspaltes 31 nicht an den rotierenden Dom 32 anschmiegen, so schiebt das von den beiden Wickelorganen 32, 33 nachgeschobene Waffelband 26 seinen Anfang gegen die zylindrische Leitfläche 36 und entlang dieser um den Dorn 32 herum vor, bis der Waffelbandanfang auf die Unterseite des entlang der abfallenden Leitfläche 33 nachfolgenden Abschnittes des Waffelbandes 26 trifft und von diesem durch Reibung mitgenommen und zusammen mit diesem ein weiteres Mal durch den Wickelspalt 31 transportiert wird, womit auch in diesem Fall der Anfang des hülsenförmigen Hohlkörpers hergestellt ist.

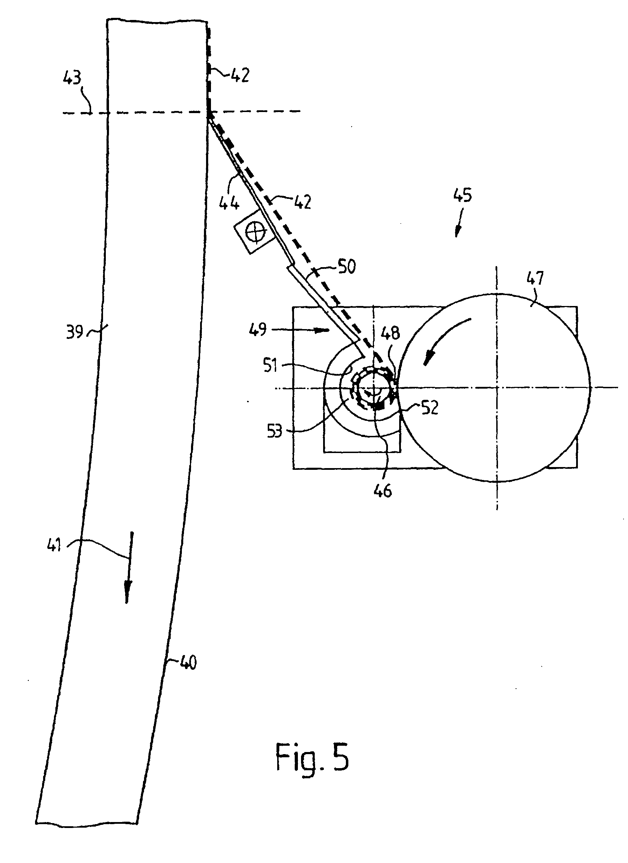

Die Fig. 5 zeigt eine weitere Ausführungsform einer Backmaschine mit einer, um eine horizontale Achse rotierenden, kontinuierlich beheizten Backtrommel 39, auf deren Außenseite eine Backfläche 40 vorgesehen ist, die mit der Backtrommel 39 in Richtung des Pfeiles 41 umläuft. Auf dieser Backfläche 40 wird aus flüssigem Waffelteig kontinuierlich ein endloses Waffelband 42 gebacken, das im warmen Zustand plastisch verformbar ist und im Bereich des seitlichen Trommelscheitels von der Backfläche 40 auf einem vorgegebenen Abnahmeniveau 43 durch ein Abnahmemesser 44 abgenommen wird. Das abgenommene Waffelband 40 wird in einer Wickelvorrichtung 45 zwischen zwei nebeneinander angeordneten, als Dorn 46 und Walze 47 ausgebildeten Wickelorganen um den Dorn 46 herum schraubenförmig überlappend zu einem hülsenförmigen Hohlkörper gewickelt. Die beiden Wickelorgane 46, 47 bilden einen schräg zur Laufrichtung des Waffelbandes 42 angeordneten Wickelspalt 48. Der Dorn 46 rotiert um seine Drehachse im gleichen Drehsinn wie die Backtrommel 39 um ihre Drehachse. Die zum Dorn 46 parallele Walze 47 rotiert um ihre Drehachse im Gegensinn zur Drehrichtung 41 der Backtrommel 39 und im Gegensinn zur Drehrichtung des Dornes 46.

Die Wickelvorrichtung 45 ist mit einer Einfädelvorrichtung 49 versehen, die ein dem Wickelspalt 48 vorgelagertes, erstes Einfädelorgan und ein dem Wickelspalt 48 nachgeordnetes, zweites Einfädelorgan umfaßt. Das erstes Einfädelorgan ist als ebene Leitfläche 50 ausgebildet, die zwischen dem Abnahmemesser 44 und dem tiefer liegenden Dorn 46 angeordnet ist und von der Unterkante des Abnahmemessers 44 schräg nach unten zum Dorn 46 hin abfällt und oberhalb dem Dorn 46 endet. Das zweite Einfädelorgan ist als zylindrische Leitfläche 50 ausgebildet, die den Dorn an seiner Unterseite und an seiner von der Walze 47 abgewandten Seite umgreift. Die zylindrische Leitfläche 51 erstreckt sich um den Dorn 46 herum bis zum unteren Ende der ebenen Leitfläche 50. Der der Walze 47 benachbarte Rand 52 der zylindrischen Leitfläche 51 ist als mit der Walze 47 zusammenwirkendes Abstreifmesser ausgebildet.

In der Anlaufphase des Herstellungsprozesses der Waffelröllchen sinkt der durch das Abnahmemesser 44 von der Backfläche 40 abgenommene Anfang des gebackenen Waffelbandes 42 durch die Schwerkraft über das Abnahmemesser 44 hinweg nach unten auf die ebene Leitfläche 50 und über diese von oben auf den rotierenden Dom 46. Dieser nimmt den Waffelbandanfang durch Reibung in seiner Drehrichtung mit zum Wickelspalt 48. In diesem wird der Waffelbandanfang an seiner Unterseite vom Dorn 46 und an seiner Oberseite von der Walze 47 durch Reibung erfaßt, zwischen Dorn 46 und Walze 47 eingeklemmt und durch diese beiden gegensinnig rotierenden Wickelorgane in den Wickelspalt 48 eingezogen. Anschließend wird der vom Abnahmeniveau 43 bis zum Wickelspalt 48 reichende Abschnitt des Waffelbandes 42 gestrafft und von dem Abnahmemesser 44 und von der ebenen Leitfläche 50 etwas abgehoben. Sollte sich der Waffelbandanfang nicht an den Dorn 46 anschmiegen, so wird er in dem zwischen dem Dorn 46 und der zylindrischen Leitfläche 51 ausgebildeten, ringförmigen Führungskanal 53 in Drehrichtung des Dornes 46 vorgeschoben bis er auf die Unterseite des entlang der ebenen Leitfläche 50 nachfolgenden Abschnittes des Waffelbandes 42 trifft. Dieser Waffelbandabschnitt nimmt den Waffelbandanfang durch Reibung mit und transportiert ihn neuerlich durch den Wickelspalt 48, womit der Anfang des hülsenförmigen Hohlkörpers hergestellt ist.

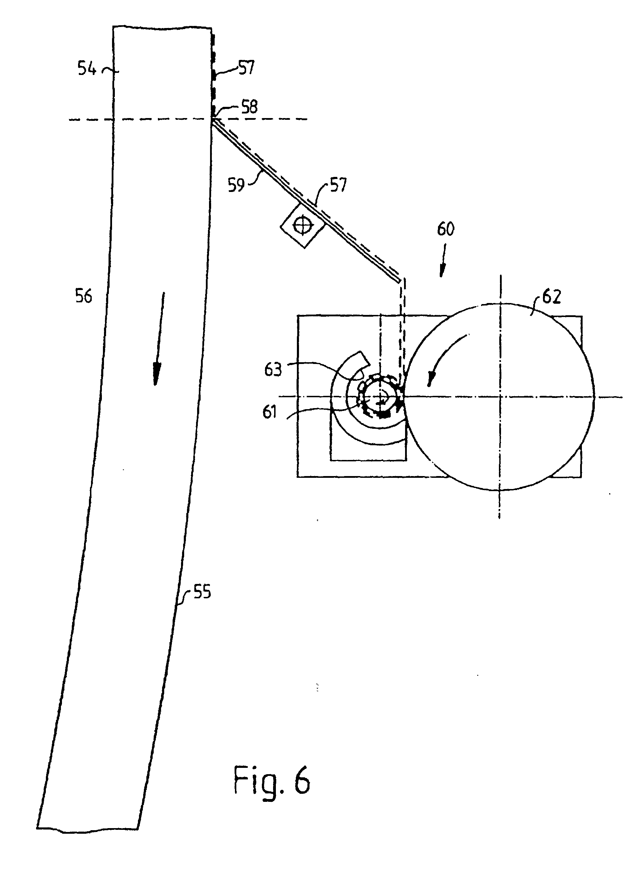

Die Fig. 6 zeigt eine weitere Ausführungsform einer Backmaschine mit einer, um eine horizontale Achse rotierenden, kontinuierlich beheizten Backtrommel 54, auf deren Außenseite eine Backfläche 55 vorgesehen ist, die mit der Backtrommel 54 in Richtung des Pfeiles 56 umläuft. Auf dieser Backfläche 55 wird aus flüssigem Waffelteig kontinuierlich ein endloses Waffelband 57 gebacken, das im warmen Zustand plastisch verformbar ist. Das Waffelband 57 wird im Bereich des seitlichen Trommelscheitels von der Backfläche 55 auf einem vorgegebenen Abnahmeniveau 58 durch ein Abnahmemesser 59 abgenommen und von diesem direkt einer Wickelvorrichtung 60 zugeführt, in der das Waffelband 57 zwischen zwei nebeneinander angeordneten, als Dorn 61 und Walze 62 ausgebildeten Wickelorganen um den Dorn 61 herum schraubenförmig überlappend zu einem hülsenförmigen Hohlkörper gewickelt. Die beiden Wickelorgane 61, 62 bilden einen unterhalb dem Abnahmemesser 59 schräg zur Laufrichtung des Waffelbandes 42 angeordneten Wickelspalt 48. Der Dorn 61 rotiert um seine Drehachse im gleichen Drehsinn wie die Backtrommel 54 um ihre Drehachse. Die zum Dorn 61 parallele Walze 62 rotiert um ihre Drehachse im Gegensinn zur Drehrichtung 56 der Backtrommel 54 und im Gegensinn zur Drehrichtung des Dornes 61.

Die Wickelvorrichtung 60 ist mit einer Einfädelvorrichtung versehen, die ein dem Wickelspalt nachgeordnetes Einfädelorgan umfaßt, das als zylindrische Leitfläche 63 ausgebildet, die den Dorn 61 an seiner Unterseite und an seiner von der Walze 62 abgewandten Seite umgibt und an ihrem, der Walze 62 benachbarte Rand als mit dieser zusammenwirkendes Abstreifmesser ausgebildet ist.

In der Anlaufphase des Herstellungsprozesses der Waffelröllchen sinkt der durch das Abnahmemesser 59 von der Backfläche 55 abgenommene Anfang des gebackenen Waffelbandes 57 durch die Schwerkraft über das Abnahmemesser 59 hinweg nach unten direkt in den zwischen Dorn 61 und Walze 62 ausgebildeten Wickelspalt. In diesem wird der Waffelbandanfang an seiner Unterseite vom Dorn 61 und an seiner Oberseite von der Walze 62 jeweils durch Reibung erfaßt und um den Dorn 61 herumgewickelt. Wenn der Waffelbandanfang bis zur Bildung der ersten Bandschleife bzw. Bandwindung z. B. durch plastische Verformung des Waffelbandes oder durch Haftung am Dorn 61 sich an den Dorn 61 anschmiegt kann die Einfädelvorrichtung weggelassen werden und das Waffelband 57 fädelt sich selbsttätig in den Wickelspalt und um den Dorn 61 herum in die Wickelvorrichtung 60 ein.

Sollte sich der Waffelbandanfang nicht an den Dorn 61 anschmiegen, so reicht eine, nur mit einem dem Wickelspalt nachgeordneten Einfädelorgan ausgestattete Einfädelvorrichtung aus. In dieser wird der Waffelbandanfang zwischen dem Dorn 61 und der zylindrischen Leitfläche 63 des Einfädelorganes in Drehrichtung des Dornes 61 um den Dorn 61 herum vorgeschoben bis er auf die Unterseite des entlang dem Abnahmemesser 59 nachfolgenden Abschnittes des Waffelbandes 57 trifft und von diesem durch Reibung mitgenommen und neuerlich durch den Wickelspalt transportiert wird, womit auch in diesem Fall der Anfang des hülsenförmigen Hohlkörpers hergestellt ist.

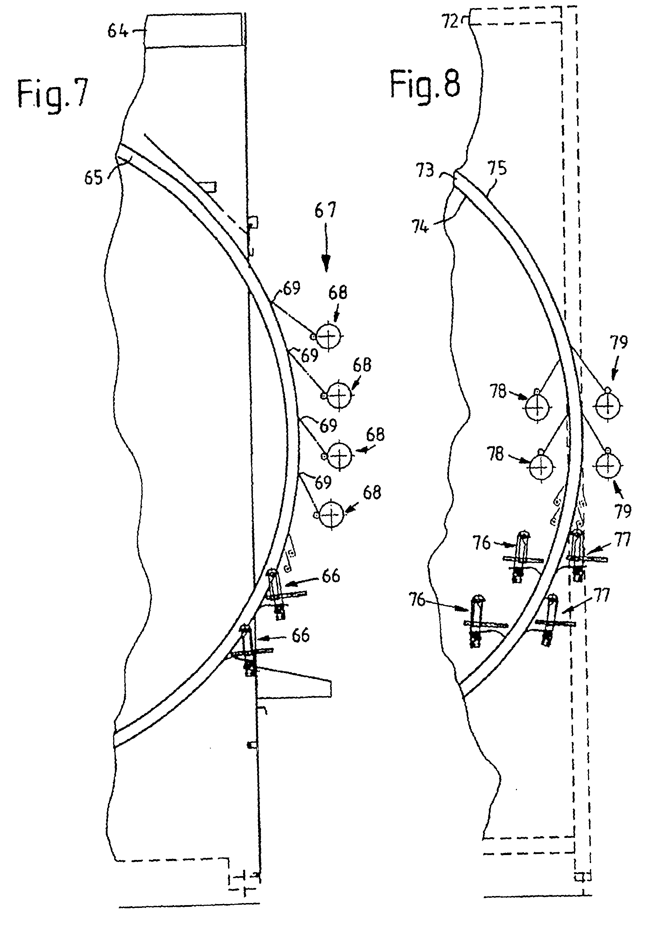

Fig. 7 zeigt eine Backmaschine 64 zum kontinuierlichen Herstellen von eßbaren Waffelröllchen mit einer, um eine horizontale Achse rotierenden Backtrommel 65, auf deren Außenseite eine endlose umlaufende Backfläche angeordnet ist, auf der nebeneinander vier endlose Waffelbänder gleichzeitig gebacken werden. Die Backmaschine ist mit zwei Vorrichtungen 66 zum Aufbringen des flüssigen Waffelteiges in vier nebeneinander liegenden Teigstreifen auf einen nach unten weisenden Teil der Backfläche versehen. Die Verarbeitungsstation 67 enthält vier, jeweils einem gebackenen Waffelband zugeordnete Wickelvorrichtungen 68, die das jeweilige Waffelband schraubenförmig überlappend zu endlosen hülsenförmigen Hohlkörper wickeln. Jedes Waffelband wird durch ein zur Drehachse der Backtrommel 65 paralleles Abnahmemesser 69 von der Backfläche abgenommen und einer Wickelvorrichtung 68 zugeführt, bei der die beiden gegensinnig rotierenden und zwischen sich einen Wickelspalt bildenden Wickelorgane, Dorn 70 und Walze 71, nebeneinander angeordnet sind. Jede Wickelvorrichtung 68 enthält eine, nicht dargestellte Einfädelvorrichtung, die im wesentlichen jener der Fig. 5 entspricht.

Fig. 8 zeigt eine Backmaschine 72 mit einer, nur aus einem zylindrischen Mantel 73 bestehenden, um eine imaginäre horizontale Achse umlaufenden Backtrommel, bei der auf der Innenseite 74 und auf der Außenseite 75 des Mantels 73 jeweils eine endlose Backfläche angeordnet ist, auf denen jeweils zwei endlose Waffelbänder gleichzeitig nebeneinander gebacken werden. Für die beiden auf die Innenseite 74 des Mantels 73 aufzutragenden Teigstreifen sind innerhalb des Mantels 73 zwei Vorrichtung 76 vorgesehen, die jeweils einen Teigstreifen aus flüssigem Waffelteiges auf einen nach oben weisenden Teil der Innenseite 74 des Mantels 73 aufbringen. Für die beiden auf die Außenseite 75 des Mantels 73 aufzutragenden Teigstreifen sind außerhalb des Mantels 73 zwei Vorrichtung 77 vorgesehen, die jeweils einen Teigstreifen aus flüssigem Waffelteiges auf einen nach unten weisenden Teil der Außenseite 75 des Mantels 73 aufbringen. In der Verarbeitungsstation der Backmaschine 72 sind sowohl innerhalb als auch außerhalb des Mantels 73 jeweils zwei Wickelvorrichtungen 78 bzw. 79 vorgesehen, die das jeweilige, von der Innenseite 74 des Mantels 73 abgenommene bzw. von der Außenseite 75 des Mantels 73 abgenommene Waffelband schraubenförmig überlappend zu einem endlosen hülsenförmigen Hohlkörper wickeln, der in der Verarbeitungsstation durch ein nicht dargestellte Schneidvorrichtung in jeweils gleich lange Stücke geschnitten werden, die die Waffelröllchen bilden. Jede Wickelvorrichtung 78 bzw. 79 enthält eine, nicht dargestellte Einfädelvorrichtung, die im wesentlichen jener der Fig. 1 entspricht.

## Patentansprüche

1. Verfahren zum kontinuierlichen Herstellen von eßbaren Waffelrölichen, bei welchem auf einer endlosen, umlaufenden Backfläche aus flüssigem, zuckerhältigem Waffelteig kontinuierlich ein endloses, im warmen Zustand plastisch verformbares Waffelband gebacken, über ein nach unten abfallendes Abnahmemesser von der heißen Backfläche auf einem vorgegebenen Abnahmeniveau abgenommen und unterhalb des Abnahmeniveaus in einem schräg zur Bahn des Waffelbandes angeordneten, zwischen zwei gegensinnig rotierenden Wickelorganen ausgebildeten Wickelspalt um ein, als Dorn ausgebildetes Wickelorgan herum schraubenförmig überlappend zu einem endlosen hülsenförmigen Hohlkörper gewickelt wird, der in einzelne Waffelröllchen abgelängt wird, die beim Abkühlen eine knusprige, spröde Konsistenz annehmen, **dadurch gekennzeichnet, daß** am Beginn jedes Wickelvorganges der Anfang des gebackenen Waffelbandes vom Abnahmeniveau über das Abnahmemesser hinweg durch die Schwerkraft bis zu den, den Wickelspalt bildenden Wickelorganen absinken gelassen und dann von zumindest einem der beiden, den Wickelspalt bildenden Wickelorgane in den Wickelspalt einziehen gelassen wird und der Anfang des Waffelbandes entweder durch Haftung auf dem als Dorn ausgebildeten Wickelorgan oder durch plastisches Verformen des Waffelbandes wieder zu dem in den Wickelspalt einlaufenden Waffelband geführt wird.

2. Verfahren nach Anspruch 1, **dadurch gekennzeichnet, daß** der auf einer Seite in den Wickelspalt eingezogene und auf der anderen Seite des Wickelspaltes austretende Anfang des gebackenen Waffelbandes innerhalb eines stationären, ringförmigen Führungskanales um das als Dorn ausgebildete Wickelorgan herum bis gegen das in den Wickelspalt eintretende Waffelband geführt wird.

3. Backmaschine zum kontinuierlichen Herstellen von eßbaren Waffelröllchen mit zumindest einer, kontinuierlich umlaufenden, beheizten Backfläche zum Backen von zumindest einem, endlosen, im warmen Zustand plastisch verformbaren Waffelband aus flüssigem, zuckerhältigem Waffelteig und mit einer Verarbeitungsstation, in der für jedes gebackene Waffelband jeweils eine der Backfläche benachbarte Abnahmevorrichtung, eine dieser nachgeordnete Wickelvorrichtung zum Erzeugen eines endlosen hülsenförmigen Hohlkörpers und eine der Wickelvorrichtung nachgeordnete Schneidvorrichtung zum Ablängen des hülsenförmigen Hohlkörpers in einzelne Waffelröllchen vorgesehen ist, wobei jede Wickelvorrichtung einen zur Bahn des betreffenden gebackenen Waffelbandes schräg angeordneten Wickelspalt besitzt, der zwischen zwei gegensinnig rotierenden Wickelorganen ausgebildet ist, von denen ein Wickelorgan als Dorn ausgebildet ist, um den herum das gebackene Waffelband schraubenförmig überlappend zu einem endlosen hülsenförmigen Hohlkörper gewickelt wird, und das andere Wickelorgan als Walze ausgebildet ist, die das gebackene Waffelband gegen den rotierenden Dorn drückt, **dadurch gekennzeichnet, daß** jede Wickelvorrichtung eine Einfädelvorrichtung umfaßt, die den Anfang des gebackenen Waffelbandes selbsttätig in den Wickelspalt der betreffenden Wickelvorrichtung einführt.

4. Backmaschine nach Anspruch 3, **dadurch gekennzeichnet, daß** die Einfädelvorrichtung zum erstmaligen Einführen des Waffelbandanfanges in den Wickelspalt ein dem Wickelspalt vorgelagertes Einfädelorgan umfaßt, das als zum Wickelspalt hin abfallende Leitfläche ausgebildet ist.

5. Backmaschine nach Anspruch 3 oder 4, **dadurch gekennzeichnet, daß** die Einfädelvorrichtung zum erneuten Einführen des aus dem Wickelspalt austretenden Waffelbandanfanges zumindest ein dem Wickelspalt nachgeordnetes Einfädelorgan umfaßt, das einen Führungskanal nach außen begrenzt, der das als Dom ausgebildete Wickelorgan in dem zwischen dem als Walze ausgebildeten Wickelorgan und dem in den Wickelspalt eintretenden Waffelband gelegenen Sektor umgibt.

6. Backmaschine nach Anspruch 5, **dadurch gekennzeichnet, daß** das den Führungskanal nach außen begrenzende Einfädelorgan als eine dem Dorn zugewandte, zylindrische Leitfläche ausgebildet ist.

7. Backmaschine nach Anspruch 5, **dadurch gekennzeichnet, daß** der Führungskanal nach außen von einer zum Dorn parallelen und zum Dorn gegensinnig rotierenden Walze begrenzt wird.

8. Backmaschine nach Anspruch 5, **dadurch gekennzeichnet, daß** der Führungskanal nach außen von mehreren, bogenförmig um den Dorn herum angeordneten, zum Dorn parallelen und zum Dorn gegensinnig rotierenden Walzen begrenzt wird.

9. Backmaschine nach Anspruch 5, **dadurch gekennzeichnet, daß** der Führungskanal nach außen von einer dem Dom zugewandten, zylindrischen Leitfläche begrenzt wird.

10. Backmaschine nach Anspruch 9, **dadurch gekennzeichnet, daß** die zylindrische Leitfläche an ihrem der Walze benachbarten Rand als ein mit der Walze zusammenwirkendes Abstreifmesser für den Waffelbandanfang ausgebildet ist.

11. Wickelvorrichtung zum Herstellen eines endlosen hülsenförmigen Hohlkörpers aus einem gebackenen, im warmen Zustand plastisch verformbaren, endlosen Waffelband mit zwei, einen Wickelspalt bildenden, gegensinnig rotierenden Wickelorganen, von denen eines als Dorn ausgebildet ist, um den herum das gebackene Waffelband schraubenförmig überlappend zu einem endlosen hülsenförmigen Hohlkörper gewickelt wird, und das andere als Walze ausgebildet ist, die das gebackene Waffelband gegen den rotierenden Dorn drückt, **dadurch gekennzeichnet, daß** eine Einfädelvorrichtung vorgesehen ist, die den Anfang des gebackenen Waffelbandes selbsttätig in den von dem Dorn und der Walze begrenzten Wickelspalt einführt.

12. Wickelvorrichtung nach Anspruch 11, **dadurch gekennzeichnet, daß** die Einfädelvorrichtung zum erstmaligen Einführen des Waffelbandanfanges in den Wickelspalt ein dem Wickelspalt vorgelagertes Einfädelorgan umfaßt, das als zum Wickelspalt hin abfallende Leitfläche ausgebildet ist.

13. Wickelvorrichtung nach Anspruch 11 oder 12, **dadurch gekennzeichnet, daß** die Einfädelvorrichtung zum erneuten Einführen des aus dem Wickelspalt austretenden Waffelbandanfanges zumindest ein dem Wickelspalt nachgeordnetes Einfädelorgan umfaßt, das einen Führungskanal nach außen begrenzt, der das als Dorn ausgebildete Wickelorgan in dem zwischen dem als Walze ausgebildeten Wickelorgan und dem in den Wickelspalt eintretenden Waffelband gelegenen Sektor umgibt.

14. Wickelvorrichtung nach Anspruch 13, **dadurch gekennzeichnet, daß** das den Führungskanal nach außen begrenzende Einfädelorgan als eine dem Dorn zugewandte, zylindrische Leitfläche ausgebildet ist.

15. Wickelvorrichtung nach Anspruch 13, **dadurch gekennzeichnet, daß** der Führungskanal nach außen von einer zum Dorn parallelen und zum Dorn gegensinnig rotierenden Walze begrenzt wird.

16. Wickelvorrichtung nach Anspruch 13, **dadurch gekennzeichnet, daß** der Führungskanal nach außen von mehreren, bogenförmig um den Dorn herum angeordneten, zum Dorn parallelen und zum Dom gegensinnig rotierenden Walzen begrenzt wird.

17. Wickelvorrichtung nach Anspruch 13, **dadurch gekennzeichnet, daß** der Führungskanal nach außen von einer dem Dom zugewandten, zylindrischen Leitfläche begrenzt wird.

18. Wickelvorrichtung nach Anspruch 17, **dadurch gekennzeichnet, daß** die zylindrische Leitfläche an ihrem der Walze benachbarten Rand als ein mit der Walze zusammenwirkendes Abstreifmesser für den Waffelbandanfang ausgebildet ist.

## Claims

1. Process for the continuous production of edible wafer rolls, in which an endless wafer strip which is plastically deformable when hot is continuously baked from liquid sugar-containing wafer batter on an endless revolving baking surface, is removed from the hot baking surface at a predetermined removal level by means of a downwardly sloping removal blade and, below the removal level, in a winding gap arranged at an angle to the path of the wafer strip and formed between two counter-rotating winding elements, is wound around a winding element in the form of a mandrel in a helically overlapping manner to form an endless tubular hollow body which is cut into individual wafer roll lengths which, on cooling, assume a crisp, brittle consistency, **characterised in that**, at the start of every winding process, the leading end of the baked wafer strip is allowed to fall by gravity from the removal level over the removal blade to the winding elements forming the winding gap and is then caused to be drawn into the winding gap by at least one of the two winding elements forming the winding gap and the leading end of the wafer strip is guided back to the wafer strip entering the winding gap, either by adhering to the winding element in the form of a mandrel or by plastic deformation of the wafer strip.

2. Process according to claim 1, **characterised in that** the leading end of the baked wafer strip, which is drawn into the winding gap on one side and emerges on the other side of the winding gap, is guided around the winding element in the form of a mandrel within a stationary, annular guide channel to meet the wafer strip entering the winding gap.

3. Baking machine for the continuous production of edible wafer rolls, comprising at least one continuously revolving heated baking surface for baking at least one endless wafer strip, which is plastically deformable when hot, from liquid sugar-containing wafer batter, and comprising a processing station in which there are provided for every baked wafer strip a removal device adjacent to the baking surface, a winding device arranged downstream thereof for producing an endless tubular hollow body, and a cutting device, arranged downstream of the winding device, for cutting the tubular hollow body into individual wafer roll lengths, each winding device having a winding gap arranged at an angle to the path of the respective baked wafer strip, which winding gap is formed between two counter-rotating winding elements, one of which winding elements is in the form of a mandrel around which the baked wafer strip is wound in a helically overlapping manner to form an endless tubular hollow body, and the other winding element is in the form of a roller that presses the baked wafer strip against the rotating mandrel, **characterised in that** each winding device includes a threading device which automatically introduces the leading end of the baked wafer strip into the winding gap of the respective winding device.

4. Baking machine according to claim 3, **characterised in that**, for introducing the leading end of the wafer strip into the winding gap for the first time, the threading device includes a threading element that is disposed in front of the winding gap and that is in the form of a guide surface that slopes downward toward the winding gap.

5. Baking machine according to claim 3 or 4, **characterised in that**, for re-introducing the leading end of the wafer strip emerging from the winding gap, the threading device includes at least one threading element that is arranged downstream of the winding gap and that outwardly defines a guide channel that surrounds the winding element in the form of a mandrel in the sector situated between the winding element in the form of a roller and the wafer strip entering the winding gap.

6. Baking machine according to claim 5, **characterised in that** the threading element outwardly defining the guide channel is in the form of a cylindrical guide surface facing the mandrel.

7. Baking machine according to claim 5, **characterised in that** the guide channel is outwardly defined by a roller that is parallel to the mandrel and that rotates counter to the mandrel.

8. Baking machine according to claim 5, **characterised in that** the guide channel is outwardly defined by a plurality of rollers that are arranged in an arc around the mandrel, are parallel to the mandrel and rotate counter to the mandrel.

9. Baking machine according to claim 5, **characterised in that** the guide channel is outwardly defined by a cylindrical guide surface facing the mandrel.

10. Baking machine according to claim 9, **characterised in that** the cylindrical guide surface is constructed, at the edge thereof adjacent to the roller, as a scraper blade for the leading end of the wafer strip, which blade co-operates with the roller.

11. Winding device for the production of an endless tubular hollow body from a baked endless wafer strip which is plastically deformable when hot, comprising two counter-rotating winding elements forming a winding gap, one of which is in the form of a mandrel around which the baked wafer strip is wound in a helically overlapping manner to form an endless tubular hollow body, and the other is in the form of a roller that presses the baked wafer strip against the rotating mandrel, **characterised in that** a threading device is provided which automatically introduces the leading end of the baked wafer strip into the winding gap defined by the mandrel and the roller.

12. Winding device according to claim 11, **characterised in that**, for introducing the leading end of the wafer strip into the winding gap for the first time, the threading device includes a threading element that is disposed in front of the winding gap and that is in the form of a guide surface that slopes downward toward the winding gap.

13. Winding device according to claim 11 or 12, **characterised in that**, for re-introducing the leading end of the wafer strip emerging from the winding gap, the threading device includes at least one threading element that is arranged downstream of the winding gap and that outwardly defines a guide channel that surrounds the winding element in the form of a mandrel in the sector situated between the winding element in the form of a roller and the wafer strip entering the winding gap.

14. Winding device according to claim 13, **characterised in that** the threading element outwardly defining the guide channel is in the form of a cylindrical guide surface facing the mandrel.

15. Winding device according to claim 13, **characterised in that** the guide channel is outwardly defined by a roller that is parallel to the mandrel and that rotates counter to the mandrel.

16. Winding device according to claim 13, **characterised in that** the guide channel is outwardly defined by a plurality of rollers that are arranged in an arc around the mandrel, are parallel to the mandrel and rotate counter to the mandrel.

17. Winding device according to claim 13, **characterised in that** the guide channel is outwardly defined by a cylindrical guide surface facing the mandrel.

18. Winding device according to claim 17, **characterised in that** the cylindrical guide surface is constructed, at the edge thereof adjacent to the roller, as a scraper blade for the leading end of the wafer strip, which blade co-operates with the roller.

## Revendications

1. Procédé pour fabriquer en continu des rouleaux de gaufre comestibles, dans lequel on cuit en continu sur une surface de cuisson sans fin et tournante une bande de gaufre sans fin, plastiquement déformable à l'état chaud et constituée de pâte à gaufre sucrée et liquide, on la prélève de la surface de cuisson chaude à un niveau de prélèvement prédéterminé au moyen d'un couteau de prélèvement incliné vers le bas et, au-dessous du niveau de prélèvement, dans un intervalle d'enroulement disposé transversalement à la voie de la bande de gaufre et formé entre deux organes d'enroulement qui tournent en sens contraire, on l'enroule en hélice autour d'un organe d'enroulement formé en tant que broche de façon à ce qu'elle se chevauche et forme un corps creux sans fin en forme de gaine qui est découpé en rouleaux de gaufre particuliers qui prennent une consistance croustillante et friable lorsqu'ils refroidissent, **caractérisé en ce que**, au commencement de chaque opération d'enroulement, on laisse descendre sous l'effet de la gravité le début de la bande de gaufre cuite depuis le niveau de prélèvement au-delà du couteau de prélèvement jusqu'aux organes d'enroulement qui forment l'intervalle d'enroulement puis on la laisse entrer dans l'intervalle d'enroulement par au moins un des deux organes d'enroulement qui forment l'intervalle d'enroulement et le début de la bande de gaufre est de nouveau guidé vers la bande de gaufre qui entre dans l'intervalle d'enroulement, soit par adhérence sur l'organe d'enroulement formé en tant que broche soit par déformation plastique de la bande de gaufre.

2. Procédé selon la revendication 1, **caractérisé en ce que** le début de la bande de gaufre cuite qui est introduit d'un côté dans l'intervalle d'enroulement et qui sort de l'autre côté de l'intervalle d'enroulement est guidé à l'intérieur d'un canal de guidage stationnaire et annulaire tout autour de l'organe d'enroulement formé en tant que broche jusque contre la bande de gaufre qui entre dans l'intervalle d'enroulement.

3. Machine de cuisson pour fabriquer en continu des rouleaux de gaufre comestibles, comportant au moins une surface de cuisson chauffée qui tourne continuellement et qui est destinée à cuire au moins une bande de gaufre sans fin, plastiquement déformable à l'état chaud et constituée de pâte à gaufre sucrée et liquide et comportant un poste de traitement dans lequel on prévoit respectivement pour chaque bande de gaufre cuite un dispositif de prélèvement voisin de la surface de cuisson, un dispositif d'enroulement placé en aval de celui-ci et destiné à produire un corps creux sans fin en forme de gaine et un dispositif de coupe placé en aval du dispositif d'enroulement et destiné à découper le corps creux en forme de gaine en rouleaux en gaufre particuliers, chaque dispositif d'enroulement possédant un intervalle d'enroulement qui est disposé transversalement à la voie de la bande de gaufre cuite concernée et qui est formé entre deux organes d'enroulement tournant en sens contraire dont l'un des organes d'enroulement est formé en tant que broche autour duquel la bande de gaufre cuite est enroulée en hélice en se chevauchant pour obtenir un corps creux sans fin en forme de gaine et dont l'autre organe d'enroulement est formé en tant que cylindre qui presse la bande de gaufre cuite contre la broche tournante, **caractérisée en ce que** chaque dispositif d'enroulement comprend un dispositif d'insertion qui introduit automatiquement le début de la bande de gaufre cuite dans l'intervalle d'enroulement du dispositif d'enroulement concerné.

4. Machine de cuisson selon la revendication 3, **caractérisée en ce que** le dispositif d'insertion destiné à introduire pour la première fois le début de la bande de gaufre dans l'intervalle d'enroulement comprend un organe d'insertion qui est placé en amont de l'intervalle d'enroulement et qui est formé en tant que surface de guidage inclinée vers l'intervalle d'enroulement.

5. Machine de cuisson selon la revendication 3 ou 4, **caractérisée en ce que** le dispositif d'insertion destiné à introduire de nouveau le début de la bande de gaufre qui sort de l'intervalle d'enroulement comprend au moins un organe d'insertion qui est placé en aval de l'intervalle d'enroulement et qui limite vers l'extérieur un canal de guidage lequel entoure l'organe d'enroulement formé en tant que broche dans le secteur placé entre l'organe d'enroulement formé en tant que cylindre et la bande de gaufre qui entre dans l'intervalle d'enroulement.

6. Machine de cuisson selon la revendication 5, **caractérisée en ce que** l'organe d'insertion, qui délimite vers l'extérieur le canal de guidage, est formé en tant que surface de guidage cylindrique tournée vers la broche.

7. Machine de cuisson selon la revendication 5, **caractérisée en ce que** le canal de guidage est délimité vers l'extérieur par un cylindre qui est parallèle à la broche et qui tourne en sens contraire de la broche.

8. Machine de cuisson selon la revendication 5, **caractérisée en ce que** le canal de guidage est limité vers l'extérieur par plusieurs cylindres disposés en arc autour de la broche, parallèles à la broche et qui tournent en sens contraire de la broche.

9. Machine de cuisson selon la revendication 5, **caractérisée en ce que** le canal de guidage est limité vers l'extérieur par une surface de guidage cylindrique tournée vers la broche.

10. Machine de cuisson selon la revendication 9, **caractérisée en ce que** la surface de guidage cylindrique est formée sur son bord voisin du cylindre en tant que couteau de prélèvement, agissant conjointement avec le cylindre, pour le début de bande de gaufre.

11. Dispositif d'enroulement pour fabriquer un corps creux en forme de gaine sans fin à partir d'une bande de gaufre sans fin et plastiquement déformable à l'état chaud, comportant deux organes d'enroulement qui forment un intervalle d'enroulement et qui tournent en sens contraire dont l'un est formé en tant que broche autour duquel la bande de gaufre cuite est enroulée en hélice en se chevauchant pour obtenir un corps creux sans fin en forme de gaine et dont l'autre est formé en tant que cylindre qui presse la bande de gaufre cuite contre la broche tournante, **caractérisé en ce que** l'on prévoit un dispositif d'insertion qui introduit automatiquement le début de la bande de gaufre cuite dans l'intervalle d'enroulement délimité par la broche et par le cylindre.

12. Dispositif d'enroulement selon la revendication 11, **caractérisé en ce que** le dispositif d'insertion destiné à introduire pour la première fois le début de la bande de gaufre dans l'intervalle d'enroulement comprend un organe d'insertion qui est placé en amont de l'intervalle d'enroulement et qui est formé en tant que surface de guidage inclinée vers l'intervalle d'enroulement.

13. Dispositif d'enroulement selon la revendication 11 ou 12, **caractérisé en ce que** le dispositif d'insertion, destiné à introduire de nouveau le début de la bande de gaufre qui sort de l'intervalle d'enroulement, comprend au moins un organe d'insertion qui est placé en aval de l'intervalle d'enroulement et qui délimite vers l'extérieur un canal de guidage lequel entoure l'organe d'enroulement formé en tant que broche dans le secteur placé entre l'organe d'enroulement formé en tant que cylindre et la bande de gaufre qui entre dans l'intervalle d'enroulement.

14. Dispositif d'enroulement selon la revendication 13, **caractérisé en ce que** l'organe d'insertion qui délimite vers l'extérieur le canal de guidage est formé en tant que surface de guidage cylindrique tournée vers la broche.

15. Dispositif d'enroulement selon la revendication 13, **caractérisé en ce que** le canal de guidage est délimité vers l'extérieur par un cylindre parallèle à la broche et qui tourne en sens contraire de la broche.

16. Dispositif d'enroulement selon la revendication 13, **caractérisé en ce que** te canal de guidage est délimité vers l'extérieur par plusieurs cylindres disposés en arc autour de la broche, parallèles à la broche et qui tournent en sens contraire de la broche.

17. Dispositif d'enroulement selon la revendication 13, **caractérisé en ce que** le canal de guidage est délimité vers l'extérieur par une surface de guidage cylindrique tournée vers la broche.

18. Dispositif d'enroulement selon la revendication 17, **caractérisé en ce que** la surface de guidage cylindrique est formée sur son bord voisin du cylindre en tant que couteau de prélèvement, agissant conjointement avec le cylindre, pour le début de bande de gaufre.
